# EUROPEAN PATENT APPLICATION

(11) **EP 4 727 249 A1**
(43) Date of publication of application: **15.04.2026**
(21) Application number: 24819547.1
(22) Date of filing: 03.06.2024
(51) Int. Cl.: H04W 74/0808, H04W 76/15, H04W 84/12

(54) **METHOD AND APPARATUS FOR SHARING NAV INFORMATION FOR SECONDARY CHANNEL ACCESS IN WIRELESS LAN SYSTEM**

(30) Priority: 09.06.2023 KR 20230074390
(71) Applicant: LG Electronics Inc., Yeongdeungpo-gu Seoul 07336 (KR)
(72) Inventor: JANG, Insun, Seoul 06772 (KR); CHOI, Jinsoo, Seoul 06772 (KR); BAEK, Sunhee, Seoul 06772 (KR); KIM, Geonhwan, Seoul 06772 (KR); YOON, Yelin, Seoul 06772 (KR); CHA, Dongju, Seoul 06772 (KR)
(74) Representative: Plasseraud IP
(86) International application number: PCT/KR2024/007570
(87) International publication number: WO 2024/253396

(57) **Abstract**

Disclosed are a method and an apparatus for sharing NAV information for secondary channel access in a wireless LAN system. A method performed by a first MLD, according to an embodiment of the present disclosure, may comprise the steps of: a first STA belonging to the first MLD receiving a first frame from a first AP belonging to a second MLD through a first link, the first link and a second link being configured for a multi-link operation, and the first frame including first NAV information regarding an NAV of a second AP belonging to the second MLD configured for a primary channel of the second link; and on the basis of the first NAV information, a second STA belonging to the first MLD receiving a second frame from the second AP on one or more secondary channels of the second link.

## Description

### [Technical Field]

The present disclosure relates to a method and an apparatus for sharing network allocation vector (NAV) information for secondary channel access in a wireless local area network (WLAN) system.

### [Background Art]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

A technical object of the present disclosure is to provide a method and an apparatus for accessing a secondary channel when a primary channel is busy.

In addition, an additional technical object of the present disclosure is to provide a method and an apparatus for sharing NAV information configured for a primary channel to support secondary channel access.

The technical objects to be achieved by the present disclosure are not limited to the above-described technical objects, and other technical objects which are not described herein will be clearly understood by those skilled in the pertinent art from the following description.

### [Technical Solution]

A method performed by a first multi-link device (MLD) in a wireless local area network (WLAN) system according to an aspect of the present disclosure may include: receiving, by a first station (STA) affiliated with the first MLD, a first frame from a first access point (AP) affiliated with a second MLD via a first link, wherein the first link and the second link are configured for multi-link operation, and the first frame includes first network allocation vector (NAV) information for a NAV of a second AP affiliated with the second MLD configured for a primary channel of the second link; and receiving, by a second STA affiliated with the first MLD, a second frame from the second AP on one or more secondary channels of the second link based on the first NAV information. A location for one or more first type RUs of the PPDU may be indicated by an RU allocation subfield in an ascending order of the plurality of first type RUs based on a lowest subcarrier of each of the plurality of first type RUs in a frequency domain.

A method performed by a second multi-link device (MLD) in a wireless local area network (WLAN) system according to an additional aspect of the present disclosure may include: transmitting, by a first access point (AP) affiliated with the second MLD, a first frame to a first station (STA) affiliated with a first MLD via a first link, wherein the first link and the second link are configured for multi-link operation, and the first frame includes first network allocation vector (NAV) information for a NAV of a second AP affiliated with the second MLD configured for a primary channel of the second link; and transmitting, by the second AP, a second frame to a second STA affiliated with the first MLD on one or more secondary channels of the second link based on the first NAV information.

### [Technical Effects]

According to an embodiment of the present disclosure, even if a medium for a primary channel is busy, a secondary channel can be used, thereby improving an efficiency of medium use and further improving wireless communication efficiency.

In addition, according to an embodiment of the present disclosure, by sharing information about the NAV configured for a primary channel, failure of secondary channel access operations due to a mismatch in NAV settings between a transmitting device and a receiving device caused by a hidden node can be prevented.

Effects achievable by the present disclosure are not limited to the above-described effects, and other effects which are not described herein may be clearly understood by those skilled in the pertinent art from the following description.

### [Brief Description of the Drawings]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 illustrates an EDCA parameter set element in a wireless LAN system to which the present disclosure may be applied.
FIG. 9 illustrates a MU EDCA parameter set element in a wireless LAN system to which the present disclosure may be applied.
FIG. 10 illustratively shows the structure of a ML element to which the present disclosure may be applied.
FIG. 11 is a diagram for describing an example of a high-level structure for an AP MLD to which the present disclosure may be applied.
FIG. 12 illustrates a channel access operation in a wireless communication system to which the present disclosure may be applied.
FIG. 13 illustrates a basic procedure for secondary channel access according to an embodiment of the present disclosure.
FIG. 14 illustrates a NAV sharing method using a multi-link device according to an embodiment of the present disclosure.
FIG. 15 illustrates a NAV sharing method using a multi-link device according to an embodiment of the present disclosure.
FIG. 16 illustrates a NAV sharing method using a multi-link device according to an embodiment of the present disclosure.
FIG. 17 illustrates an operation of a station device for a NAV information sharing method for secondary channel access according to an embodiment of the present disclosure.
FIG. 18 illustrates an operation of an access point device for a secondary channel access method according to an embodiment of the present disclosure.

### [Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

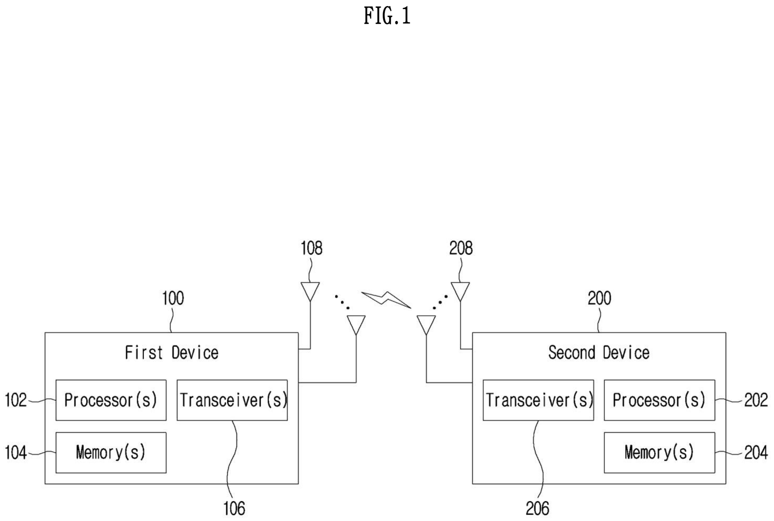

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/e ncoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

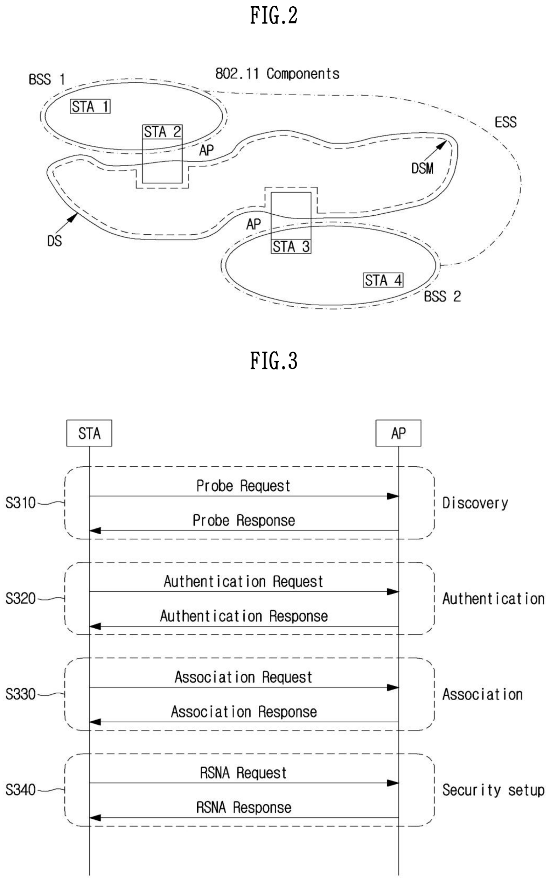

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

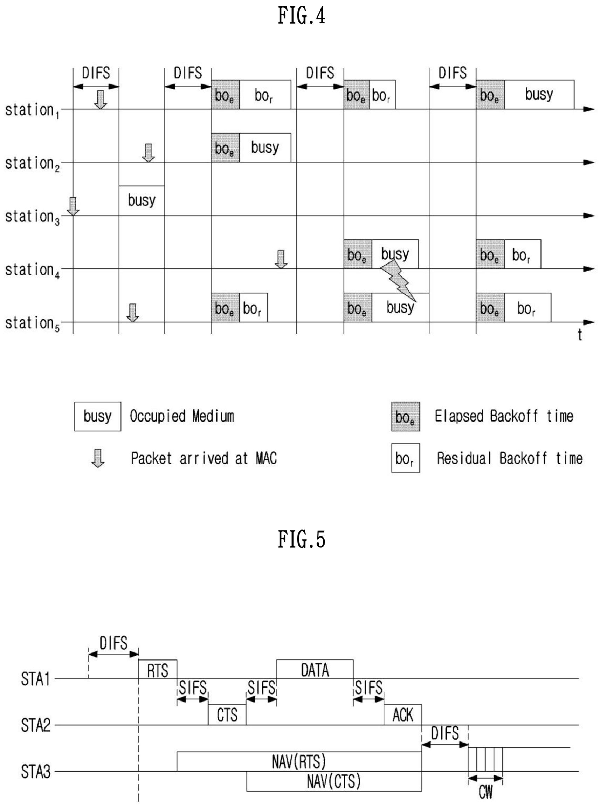

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

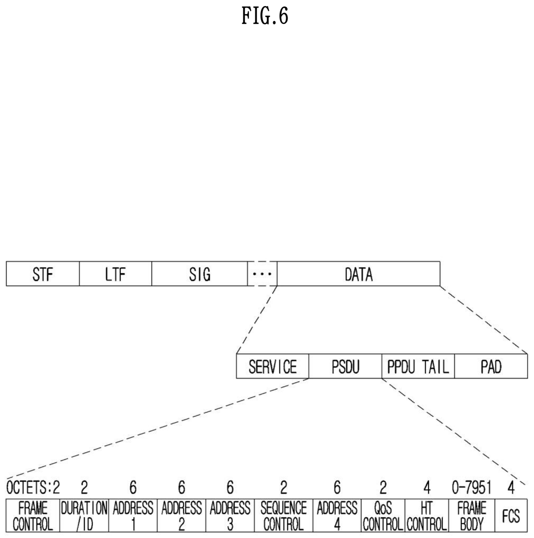

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

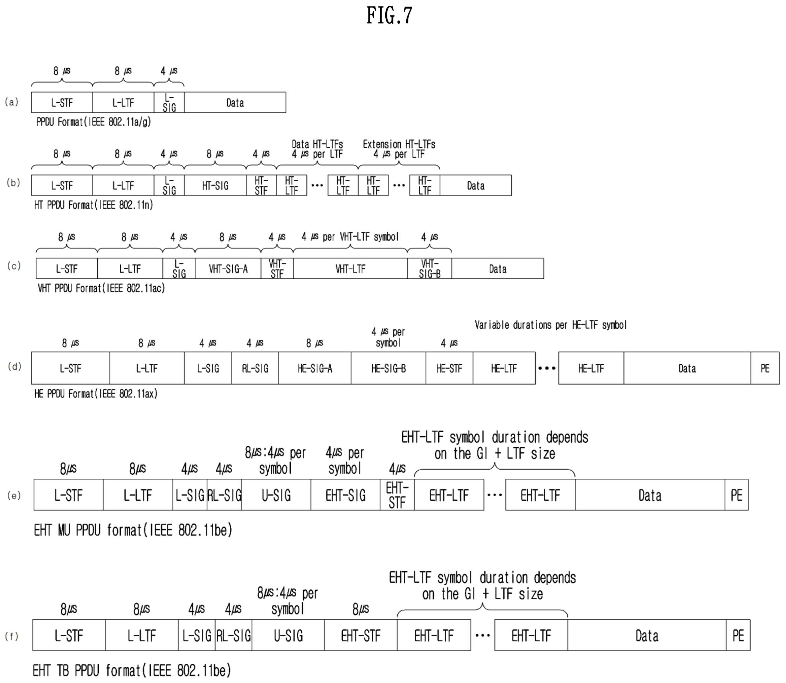

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique

(e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### EDCA Channel Access

The EDCA Channel Access protocol adds four independent enhanced distributed channel access functions (EDCAFs) to the DCF procedure to provide differentiated priority to traffic transmitted using four different access categories (ACs).

In the EDCA backoff procedure, each EDCAF maintains a MAC variable CW[AC], which is initialized to the value of the parameter CWmin[AC] for the AC of the corresponding EDCAF.

A TXNAV timer is a single timer shared by the EDCAFs within an STA, and is initialized to the duration of the Duration/ID field of the most recently successfully transmitted frame by the TXOP holder, excluding PS-Poll frames. The TXNAV timer starts counting down from the end of the transmission of the PPDU including the corresponding frame.

A backoff procedure by EDCAF can be performed when the medium is busy in the primary channel, such as indicated by physical carrier sensing (CS), virtual CS, etc.

Three modes of EDCA TXOP are defined: EDCA TXOP initiation, EDCA TXOP sharing, and multi-frame exchange sequence within an EDCA TXOP. The EDCA TXOP initiation occurs when an EDCA rule grants access to the medium. The EDCA TXOP sharing occurs when an EDCAF within an AP supporting DL MU-MIMO gains access to the medium, making that AC the primary AC and including traffic from queues associated with other ACs in the MU PPDUs transmitted during the TXOP. The multi-frame exchange sequence(s) within a TXOP occur when the EDCAF has the opportunity to access the medium.

Each EDCAF maintains a backoff counter whose value is measured in backoff slots. When the backoff procedure is initiated, the backoff counter is set to a randomly selected integer value using a uniform distribution in the range 0 to CW[AC].

For each EDCAF, an EDCAF operation is performed on the primary channel at predefined slot boundaries. At each slot boundary, each EDCAF decides to perform only one of the following functions: i) decrement a backoff counter, ii) initialize a TXOP, iii) decide not to transmit and invoke the backoff procedure, iv) invoke the backoff procedure due to an internal collision, or v) perform no action. However, at each slot boundary, if the backoff counter for that EDCAF has a non-zero value, each EDCAF decrements the backoff counter.

If one of the EDCAFs of an STA is permitted to initiate a TXOP, the STA performs one of the following actions:
a) If the secondary channel, secondary 40MHz channel, and secondary 80MHz channel were idle during the PIFS period immediately prior to the start of the TXOP, the STA transmits a 160MHz or 80+80MHz mask PPDU.
b) If both the secondary channel and the secondary 40MHz channel were idle during the PIFS period immediately prior to the start of the TXOP, the STA transmits an 80MHz mask PPDU on the primary 80MHz channel.
c) If the secondary channel was idle during 1) the DIFS period if the PPDU is transmitted within the 2.4GHz band, or 2) otherwise the PIFS period immediately prior to the start of the TXOP, the STA transmits a 40MHz mask PPDU on the primary 40MHz channel.
d) The STA transmits a 20MHz mask PPDU on the primary 20MHz channel.
e) The STA does not transmit anything and invokes the backoff procedure for EDCAF.
f) If the secondary TVHT_W channel and the secondary TVHT_2W channel were in an IDLE state during the PIFS period immediately prior to the start of the TXOP, the STA transmits a TVHT_4W or TVHT_2W+2W mask PPDU.
g) If the secondary TVHT_W channel was in an IDLE state during the PIFS period immediately prior to the start of the TXOP, the STA transmits a TVHT_2W or TVHT_W+W mask PPDU.
h) The STA transmits a TVHT_W mask PPDU on the primary TVHT_W channel.
i) If all non-punctured 20MHz subchannels (except the primary 20MHz channel) were IDLE during the PIFS period immediately prior to the start of the TXOP, the STA transmits an 80MHz HE MU PPDU in which the only punctured subchannel in the preamble is the secondary 20MHz channel.
j) If all non-punctured 20MHz subchannels were IDLE during the PIFS period immediately prior to the start of the TXOP, the STA transmits an 80MHz HE MU PPDU in which the only punctured subchannel in the preamble is one of the two 20MHz subchannels in the secondary 20MHz channel.
k) If all non-punctured 20MHz subchannels were IDLE for the PIFS period immediately prior to the start of the TXOP, the STA transmits a 160MHz or 80+80MHz HE MU PPDU, where the punctured subchannels in the preamble are the secondary 20MHz channel and zero to two 20MHz subchannels of the secondary 80MHz channel.

If two 20MHz subchannels of the secondary 80MHz channel are punctured, this corresponds to the lower two or upper two. For a 160MHz preamble, no more than two adjacent 20MHz subchannels are punctured throughout the entire preamble.

l) If all non-punctured 20MHz subchannels were IDLE during the PIFS period immediately prior to the start of the TXOP, the STA transmits a 160MHz or 80+80MHz HE MU PPDU, where the punctured subchannels in the preamble are zero, one, or two 20MHz subchannels in the secondary 40MHz channel and zero to two 20MHz subchannels in the secondary 80MHz channel.

At least one 20MHz subchannel is punctured. If two 20MHz subchannels in the secondary 80MHz channel are punctured, this corresponds to the lower two or upper two. For a 160MHz preamble, no more than two adjacent 20MHz subchannels are punctured throughout the preamble.

If both the STA and the BSS to which the STA belongs support multiple channel widths, the EDCA TXOP is acquired based solely on the activity on the primary channel. Here, "IDLE medium" may refer to an IDLE primary channel. Similarly, "BUSY medium" may refer to a BUSY primary channel.

A CCA is sampled according to the DCF timing relationship, and slot boundaries can be determined solely by activity on the primary channel. A channel IDLE during the PIFS period may mean that the CCA for that channel is determined to be in the IDLE state whenever the CCA is sampled during the PIFS period that ends at the start of transmission.

An STA that supports multiple NAVs updates its NAVs. For an STA with two NAV timers, duration information is indicated by a frame as follows:
- If the frame has a Duration field, the duration information is indicated in the Duration field.
- If the frame is PS-Poll, the duration information is equal to the time (in microseconds) required to transmit one ACK frame and one SIFS, according to the data rate selection rule.

An STA that receives at least one frame from a PSDU can update its NAV with information in a valid Duration field of a PSDU. If an RA of the received frame is the same as the STA's own MAC address, the STA does not update its NAV. Furthermore, if the received frame is a CTS frame and its TA is the same as the STA's own MAC address, the STA does not update its NAV. For all other received frames, the STA updates its NAV when the received Duration is greater than the STA's current NAV value.

When an STA receives information that the NAV is greater than the STA's current NAV value, the STA updates the NAV with the new NAV value. This information can be received in the Duration field of the NDP CTS, NDP ACK, and S1G beacon frame.

An AP that is not a TXOP holder updates the NAV with the duration information indicated by the RXVECTOR parameter TXOP_DURATION for the PPDU if all of the following conditions are met. If any of the following conditions are not met, the AP does not update the NAV with the duration information indicated by the RXVECTOR parameter TXOP_DURATION.
- The RXVECTOR parameter TXOP_DURATION is not UNSPECIFIED.
- The AP does not receive a frame including a Duration field in the PPDU.
- The duration indicated by the RXVECTOR parameter TXOP_DURATION is greater than the current NAV value of the AP.

An AP that is a TXOP holder updates its NAV with the duration information indicated by the RXVECTOR parameter TXOP_DURATION for the PPDU if all of the following conditions are met. It does not update its NAV with the duration information indicated by the RXVECTOR parameter TXOP_DURATION if any of the following conditions are not met:
- The RXVECTOR parameter TXOP_DURATION is not UNSPECIFIED.
- The AP does not receive a frame including a Duration field in the PPDU.
- The duration indicated by the RXVECTOR parameter TXOP_DURATION is greater than the AP's current NAV value.
- The RXVECTOR parameter BSS_COLOR is not the same as the BSS color of the HE AP.

Non-AP STAs can maintain two NAVs, and APs can maintain two NAVs: an intra-BSS NAV and a basic NAV. The intra-BSS NAV is updated by intra-BSS PPDUs. The basic NAV is updated by inter-BSS PPDUs or PPDUs that cannot be classified as inter-BSS or inter-BSS.

An STA updates the intra-BSS NAV with the duration information indicated by the received frame in the PSDU only if all of the following conditions are met:
- The frame is identified as inter-BSS.
- The indicated duration is greater than the current intra-BSS NAV value.
- The RA of the received frame is not the MAC address of the STA. Or, the STA is not the TXOP holder, and the PPDU carrying the frame does not include a frame requesting an immediate response from the STA. Alternatively, the STA is not the TXOP holder, and the received frame is a trigger frame.

The STA updates the basic NAV with the duration information indicated by the received frame in the PSDU only if all of the following conditions are met:
- The frame is identified as inter-BSS or cannot be identified as inter-BSS or inter-BSS.
- The indicated duration is greater than the current basic NAV value.
- The RA of the received frame is not the MAC address of the STA.

An STA that is not the TXOP holder updates its intra-BSS NAV with the duration information indicated by the RXVECTOR parameter TXOP_DURATION for the PPDU only if all of the following conditions are met:
- The RXVECTOR parameter TXOP_DURATION is not UNSPECIFIED.
- The PPDU conveying the information in the RXVECTOR parameter is identified as Intra-BSS.
- The STA does not receive a frame containing a Duration field in the PPDU.
- The duration information indicated by the RXVECTOR parameter TXOP_DURATION is greater than the STA's current Intra-BSS NAV.

An STA updates the basic NAV with the duration information indicated by the RXVECTOR parameter TXOP_DURATION for the PPDU only if all of the following conditions are met:
- The RXVECTOR parameter TXOP_DURATION is not UNSPECIFIED.
- The PPDU conveying information about the RXVECTOR parameter is identified as inter-BSS or cannot be identified as inter-BSS or inter-BSS.
- The STA does not receive a frame including a Duration field in the PPDU.
- The duration information indicated by the RXVECTOR parameter TXOP_DURATION is greater than the basic NAV of the current STA.

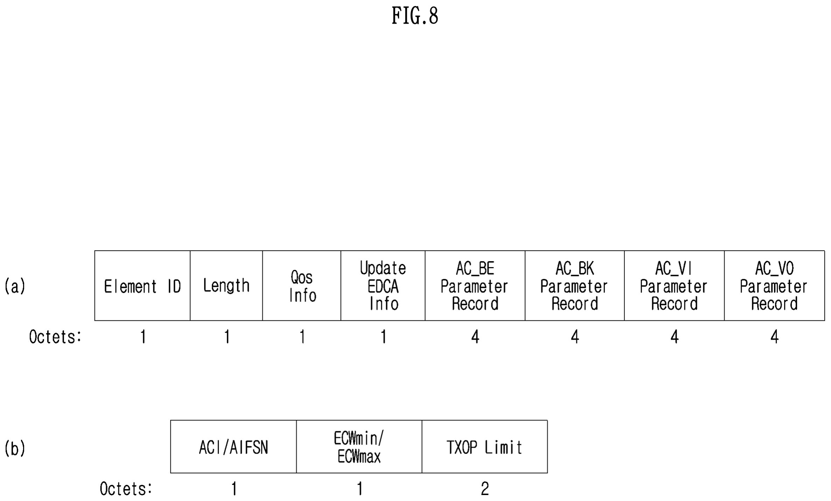

FIG. 8 illustrates an EDCA parameter set element in a wireless LAN system to which the present disclosure may be applied.

For infrastructure BSSs, the EDCA parameter set element is used by the AP to configured policies (by changing default MIB attribute values) and to change policies when accepting new STAs or new traffic, or to adapt to changes in the provided load. The most recent EDCA parameter set element received by the STA is used to update the appropriate management information base (MIB) values.

Referring to FIG. 8(a), the EDCA parameter set element includes an Element ID field, a Length field, a QoS Info field, an Update EDCA Info field, an AC_BE Parameter Record field, an AC_BK Parameter Record field, an AC_VI Parameter Record field, and an AC_VO Parameter Record field.

The Element ID field indicates the identifier of the element, and the Length field indicates the number of octets in the element excluding the Element ID and Length fields.

The QoS Info field includes capability information bits, and the content of the field varies depending on whether the STA is within the AP.

The Update EDCA Info field includes an Override field, which indicates whether the corresponding EDCA parameter set element overrides previously stored EDCA parameters, and a PS-Poll ACI (access category index) field, which informs the STA of the access category for transmitting the PS-Poll frame.

Referring to FIG. 8(b), the formats of the AC_BE Parameter Record field, AC_BK Parameter Record field, AC_VI Parameter Record field, and AC_VO Parameter Record field are identical, and each field includes an ACI/AIFSN subfield, an ECWmin/ECWmax subfield, and a TXOP limit subfield.

The ACI/AIFSN field contains i) an arbitration interframe space number (AIFSN) subfield indicating the number of slots after SIFS that the STA will delay before invoking backoff or starting transmission, ii) an admission control mandatory (ACM) subfield indicating whether admission control is required for the access category, and iii) an ACI subfield indicating an access category index (ACI) value. The ACI subfield refers to the access category to which all parameters in this record correspond.

The ECWmin/ECWmax subfields encode the CWmin and CWmax values in exponential form, i.e., CWmin=2^{ECWmin}-1 and CWmax=2^{ECWmax}-1.

The TXOP limit subfield specifies an unsigned integer in units. The TXOP limit is advertised by the AP through this subfield, and the TXOP holder must ensure that the TXOP duration does not exceed the TXOP limit if the TXOP duration is not 0.

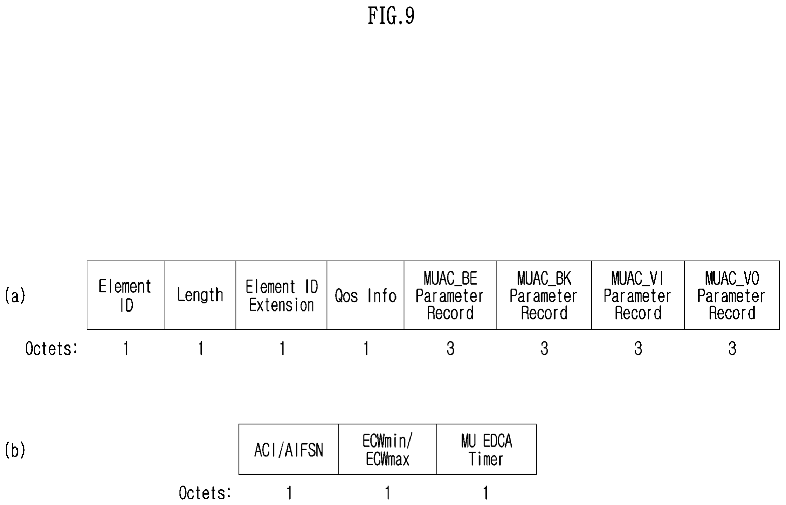

FIG. 9 illustrates a MU EDCA parameter set element in a wireless LAN system to which the present disclosure may be applied.

For infrastructure BSS, the MU EDCA parameter set element is used by the AP to control EDCA usage by non-AP STAs following a specific UL MU TB PPDU transmission. The most recent MU EDCA parameter set element received by the non-AP STA is used to update the appropriate MIB value.

Referring to FIG. 9(a), the MU EDCA parameter set element is composed of an Element ID field, a Length field, an Element ID Extension field, a QoS Info field, an MU AC_BE Parameter Record field, an MU AC_BK Parameter Record field, an MU AC_VI Parameter Record field, and an MU AC_VO Parameter Record field.

The Element ID field and the Element ID Extension field indicate the identifier of the corresponding element, and the Length field indicates the number of octets within the element excluding the Element ID and Length fields.

The QoS Info field includes capability information bits, and the contents of the field vary depending on whether the STA is within the AP.

Referring to FIG. 9(b), the MU AC_BE Parameter Record field, MU AC_BK Parameter Record field, MU AC_VI Parameter Record field, and MU AC_VO Parameter Record field have the same format, and each field includes an ACI/AIFSN subfield, an ECWmin/ECWmax subfield, and an MU EDCA Timer subfield.

The descriptions of the ACI/AIFSN subfield and the ECWmin/ECWmax subfield are identical to those described in FIG. 8(b).

The MU EDCA Timer subfield indicates the period during which the STA uses MU EDCA parameters for the corresponding AC.

### Multi-link Operation

Hereinafter, a multi-link operation supported by a STA according to the present disclosure will be described.

A STA (an AP STA and/or a non-AP STA) described in the present disclosure may support multi link (ML) communication. ML communication may refer to communication supporting a plurality of links. A link related to ML communication may include a channel (e.g., 20/40/80/160/240/320MHz channels) in a frequency band in which a STA operates (e.g., a 2.4GHz band, a 5GHz band, a 6GHz band, etc.). A plurality of links used for ML communication may be configured in various ways. For example, a plurality of links supported by one STA for ML communication may belong to the same frequency band or belong to a different frequency band. In addition, each link may correspond to a frequency unit in a predetermined size (e.g., a channel, a subchannel, a RU, etc.). In addition, all or part of a plurality of links may be a frequency unit in the same size or may be a frequency unit in a different size.

When one STA supports a plurality of links, a transmitting or receiving device supporting each link may operate like one logical STA. In other words, a MLD (multi-link device) refers to a device which has at least one affiliated STA as a logical entity and has a single MAC service access point (SAP) for one MAC data service and logical link control (LLC). A non-AP MLD refers to a MLD that each STA affiliated with a corresponding MLD is a non-AP STA. A multi-radio non-AP MLD refers to a non-AP MLD that supports reception or exchange of a frame in at least one link at a time. An AP MLD refers to a MLD that each STA affiliated with a corresponding MLD is an AP STA.

A multi-link operation (MLO) may enable a non-AP MLD to discover, authenticate and associate an AP MLD and set up a plurality of links. Based on a supported capability exchanged during an association procedure, each link may enable channel access and frame exchange between a non-AP MLD and an AP MLD. A STA affiliated with a MLD may select and manage its capability and operation parameter independently from other STA(s) affiliated with the same MLD.

Through a multi-link setup process, an AP MLD and/or a non-AP MLD may transmit or receive link-related information which may be supported by a corresponding MLD. Link-related information may include at least one of whether it is a simultaneous transmit and receive (STR) operation capable of simultaneous transmission or reception on a plurality of links or a non-simultaneous transmit and receive (NSTR) operation incapable of simultaneous transmission or reception, information on the number/upper limit of UL/DL links, information on a location/a band/a resource of an UL/DL link, information on a frame type (e.g., management, control, data) available or preferred in at least one UL/DL link, information on an ACK policy available or preferred in at least one UL/DL link or information on a traffic identifier (TID) available in at least one UL/DL link supported by a corresponding MLD.

An AP MLD (e.g., a NSTR mobile AP MLD) may configure one link among a plurality of links as a primary link. An AP MLD may perform a beacon frame, a probe response frame and a group addressed data frame only on a primary link. The remaining other link(s) of a plurality of links may be referred to as a non-primary link. An AP MLD operating on a non-primary link may operate not to transmit a beacon frame or a probe response frame. In addition, a non-AP MLD may perform frame exchange during authentication, (re)association and 4-way handshaking only on a primary link.

When at least one traffic identifier (TID) is mapped to a corresponding link through a multi-link setup process, a setup link may be defined as being enabled and when there is no TID mapped to a corresponding link, a setup link may be defined as being disabled. A TID should be always mapped to at least one setup link unless admission control is used. Basically, a TID is mapped to all setup links, so all setup links may be activated.

When a link is activated, a corresponding link may be used for frame exchange according to a power state of a non-AP STA operating in a corresponding link. Only a MSDU or an A-MSDU with a TID mapped to an active link may be transmitted in a corresponding link. A management frame and a control frame may be transmitted only in an active link.

When a link is deactivated, a corresponding link may not be used for frame exchange by including a management frame for both a DL and an UL.

In a multi-link setup process, activation/deactivation of each link may be indicated through TID-to-Link mapping. TID-to-Link mapping may be performed in a default mapping mode or/and a negotiation mapping mode.

One STA among STAs belonging to a MLD may provide information on at least one link other than its link for multi-link discovery (e.g., obtain information on a plurality of links including a corresponding link on one link) or multi-link setup (e.g., simultaneous association on a plurality of links through exchange between an association request/response frame on one link). To provide this information, a multi-link (ML) element may be defined.

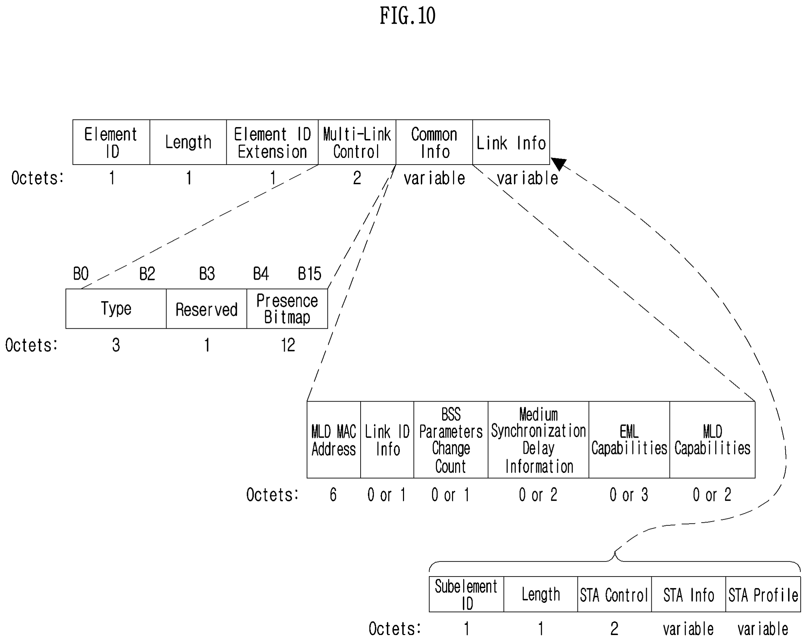

FIG. 10 illustratively shows the structure of a ML element to which the present disclosure may be applied.

In a ML element, an element ID field and an element ID extension field may have a specific value (e.g., 255 and 107) showing that they are a ML element and a length field may have a value showing a length of the remaining fields (e.g., an octet unit) excluding an element ID field and a length field.

A multi-link control field is defined as having a size of 2 octets and may include a 3-bit type subfield, a 1-bit reserved bit and a 12-bit presence bitmap subfield. A type subfield may have a value indicating one of types such as basic, a probe request, a reconfiguration, a tunneled direct-link setup (TDLS), priority access, etc. A presence bitmap subfield shows whether there are a variety of subfield(s) within a common information field and may be defined in a different format according to various variants (or types described above) of a ML element.

A common information field is defined as having a variable size and may include a 6-octet MLD MAC address subfield, and this subfield may have a value specifying a MAC address of a MLD to which a STA transmitting a basic ML element belongs. In addition, a link ID information subfield, a BSS parameter change count subfield, a medium synchronization delay information subfield, an enhanced multi-link (EML) capability subfield, a MLD capability subfield, etc. may or may not be included in a common information field.

A link information field is defined as having a variable size, and may include link specific information and may exist optionally. If a link information field exists, it may include at least one sub-element. A format and order of a sub-element may be defined in various ways. As an example of an optional sub-element ID for a basic variant ML element, 0, a value of a sub-element ID, corresponds to a name of a per-STA profile and is extensible, and that value 221 corresponds to a vendor-specific name and whether it may be extended may be determined by a vendor, and the remaining values 1-220 and 222-255 may be reserved.

A per-STA profile sub-element may include a 1-octet sub-element ID subfield, a 1-octet length subfield, a 2-octet STA control subfield, a variable-sized STA information subfield and a variable-sized STA profile subfield. A STA control subfield may include information such as a link ID, whether a complete profile is included, whether a STA MAC address exists, etc. A STA information subfield may include information such as a STA MAC address, etc. A STA profile subfield may include information included in a probe response or probe request frame body, information included in a (re)association response or (re)association request frame body, etc. according to whether a reported STA is an AP STA or a non-AP STA.

The format of a ML element in FIG. 10 is illustrative, and a order, a name, a size, etc. of a field/a subfield may be changed, an additional field/subfield may be further defined and some fields/subfields may be excluded. In other words, a common information field may include common information between STAs in a MLD, and a link information field may include specific information on each STA/link (e.g., in a per-STA profile sub-element including a link ID corresponding to a corresponding STA).

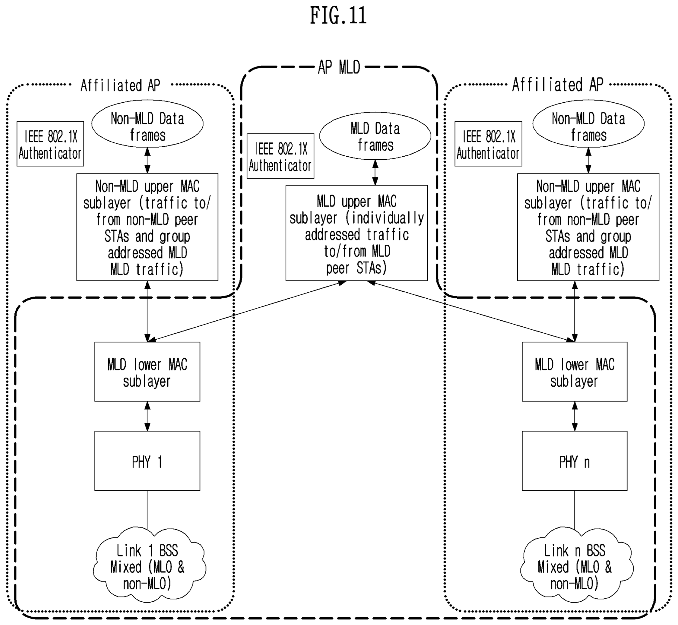

FIG. 11 is a diagram for describing the example of a high-level architecture for an AP MLD to which the present disclosure may be applied.

An AP MLD may include one or more APs. One AP MLD may have a high-level architecture as in FIG. 11. For example, a MLD may control various procedures/parameters common to multiple APs by using an upper MAC sublayer. For example, authentication, association, sequence number (SN)/packet number (PN) allocation, power saving buffering for individually addressed frames, etc. may be commonly controlled among APs affiliated with one AP MLD.

Each affiliated AP (e.g., AP 1, ..., AP n) may provide an upper MAC sublayer function for a non-MLD data frame (e.g., traffic transmitted and received with a non-MLD STA, group-addressed MLD traffic, etc.). An AP MLD may provide an upper MAC sublayer function for a MLD data frame (e.g., traffic transmitted and received with a MLD STA) and provide MLD data to a lower MAC sublayer of each affiliated AP. Each affiliated AP may provide a PHY function (e.g., PHY 1, ..., PHY n). Both a ML operation (MLO) and a non-MLO may be performed on a link corresponding to each PHY (e.g., link 1, ..., link n).

### Secondary channel access method

Channel access defined in the current 802.11 standard is performed based on the primary channel. That is, an STA can transmit a frame on a medium including the primary channel and an IDLE secondary channel only when the primary channel is in an IDLE state and the back-off counter (BC) is 0, and to this end, all STAs perform CCA (Clear Channel Assessment) with the primary channel as a priority. Accordingly, the AP announces the primary channel of the BSS, and the primary channel is always included in the channel used to transmit management frames such as beacon frames and probe response frames. This mechanism can achieve the effect of performing frame exchanges between all STAs and APs without interference. In other words, it is effective for frame protection. However, on the other hand, when only the primary channel is busy, i.e., the STA cannot access the secondary channel that is IDLE, so it is inefficient from the perspective of media use.

In the present disclosure, a primary channel may refer to a common channel of operation for all STAs that are members of a BSS. For example, in a 20 MHz, 40 MHz, 80 MHz, 160 MHz, or 320 MHz BSS, the primary channel may be a primary 20 MHz channel. In addition, in the present disclosure, a secondary channel may refer to one or more channels linked to a primary channel that are used to generate a wider channel than the primary channel.

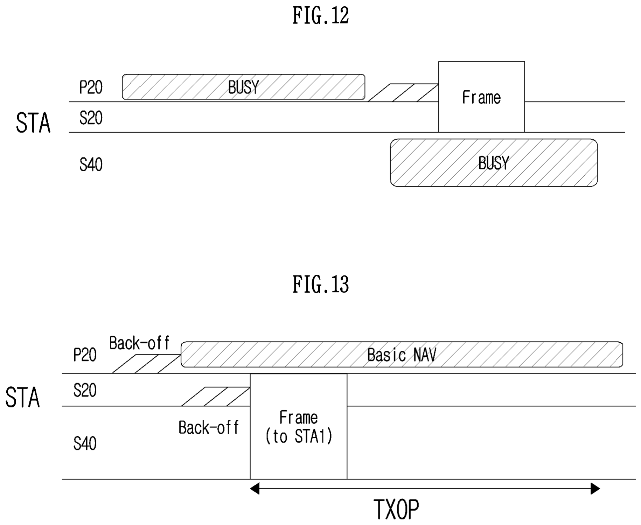

FIG. 12 illustrates a channel access operation in a wireless communication system to which the present disclosure may be applied.

FIG. 12 illustrates channel access based on the primary channel in an 80 MHz bandwidth.

Hereinafter, for convenience of explanation, in the present disclosure, the primary channel and secondary channel are referred to as follows, as in FIG. 12.
- P20: primary 20MHz channel
- S20: secondary 20MHz channel (i.e., when the bandwidth is 40MHz, it refers to the remaining 20MHz secondary channel excluding P20. In other words, it refers to the 20MHz secondary channel adjacent to P20.)
- S40: Secondary 40MHz channel (i.e., when the bandwidth is 80MHz, it refers to the remaining 40MHz of secondary channels excluding P20+S20)
- S80: Secondary 80MHz channel (i.e., when the bandwidth is 160MHz, it refers to the remaining 80MHz of secondary channels excluding P20+S20+S40)
- S160: Secondary 160MHz channel (i.e., when the bandwidth is 320MHz, it refers to the remaining 160MHz of secondary channels excluding P20+S20+S40+S80)
- S320: Secondary 320MHz channel (i.e., when the bandwidth is 640MHz, it refers to the remaining 320MHz of secondary channels excluding P20+S20+S40+S80+S160)

Referring to FIG. 12, according to the existing operation, if P20 is BUSY due to CCA or NAV, etc., the STA does not decrease the backoff counter (BC) and waits until it becomes IDLE. When the backoff counter becomes 0 through this back-off procedure, the STA checks the channel status of S20 and S40 (i.e., CCA) and transmits a frame on the IDLE channel. Since the example of FIG. 12 assumes that S40 is BUSY, the STA transmits a frame corresponding to a 40MHz PPDU through P20 and S20.

As described above, as shown in FIG. 12, when P20 is BUSY and S20 and S40 are IDLE, the bandwidth corresponding to 60MHz (i.e., S20+S40) is wasted (i.e., unused), thereby reducing the efficiency of medium usage.

Therefore, in the present disclosure below, a method for accessing a secondary channel when P20 is BUSY is proposed.

In the present disclosure, secondary channel access refers to an STA accessing a secondary channel (i.e., the medium on the secondary channel) when the primary channel (i.e., the medium on the primary channel) is BUSY (e.g., due to OBSS traffic or other circumstances) . Here, the AP or non-AP STA may determine that the primary channel is BUSY based on physical carrier sensing and/or virtual carrier sensing and/or NAV settings.

Furthermore, for convenience of explanation in this disclosure, the term "secondary channel" refers to one or more channels other than the primary channel. However, the present disclosure is not limited thereto and may also be referred to as a "non-primary channel." Furthermore, for convenience of explanation in this disclosure, the operation of occupying the medium on one or more secondary channels and transmitting and receiving frames/PPDUs therethrough is referred to as "secondary channel access." However, the present disclosure is not limited thereto and may also be referred to as a "non-primary channel access."

The terms (i.e., designations, names, etc.) used in this disclosure are for the convenience of explanation, and the proposed method of this disclosure is not limited thereto, and may be replaced with other terms within the scope that does not change the method proposed in this disclosure. In addition, in this disclosure, STA may be used to mean either an AP STA or a non-AP STA.

According to one embodiment of the present disclosure, the capability of an STA for secondary channel access (SCA) may be defined. For example, an STA and an AP may mutually exchange information (i.e., inform each other of their capabilities) regarding whether they support SCA capability and/or whether SCA is enabled. The SCA capability may be determined based on whether the STA can perform Type 1 CCA (i.e., referred to as preamble detection (PD)), which identifies wireless LAN frames performed on a primary channel (PCH), on a secondary channel (SCH), i.e., whether the STA can decode frames on the SCH. This allows the STA to set a NAV (e.g., an intra-BSS NAV or a basic NAV) on the SCH as well.
- Level 0: STAs with level 0 capabilities can only perform Type 2 CCA on the SCH, as before, and cannot perform Type 1 CCA (i.e., No Back-off on the SCH). That is, STAs with level 0 capabilities can only perform Type 2 CCA, including CCA that detects wireless LAN signals on the SCH (i.e., Guard Interval Detection (GID)) and CCA that detects signals above a certain strength (i.e., Energy Detection (ED)).
- Level 1: STAs with level 1 capabilities can only perform Type 1 CCA, PD, on one SCH at a time (i.e., Back-off on an SCH at a time). In other words, STAs with level 1 capabilities cannot perform Type 1 CCA on multiple SCHs simultaneously.
- Level 2: An STA with level 2 capability can perform PD, which is Type 1 CCA, on more than one SCH at the same time (i.e., back-off on SCHs at the same time). In other words, an STA with level 2 capability can perform Type 1 CCA on multiple SCHs at the same time.

These capabilities can be transmitted by being included in fields/elements within a frame (e.g., UHR capability elements/information elements (IEs)). For example, an AP can transmit capabilities by including them in a beacon frame, a probe response frame, a (re)association request frame, etc., and a non-AP STA can transmit capabilities by including them in a probe request frame, a (re)association request frame, etc.

The basic procedures for secondary channel access are described below.

An STA can configure (i.e., maintain/update) two NAVs: a basic NAV and an intra-BSS NAV. The basic NAV can be updated based on a PPDU identified as an inter-BSS PPDU, or based on a PPDU that cannot be identified as an inter-BSS PPDU or an intra-BSS PPDU. Conversely, the intra-BSS NAV can be updated based on a PPDU identified as an intra-BSS PPDU. Intra-BSS PPDUs and inter-BSS PPDUs can be distinguished based on the behavior defined in the WLAN standard.

For example, if an intra-BSS NAV is configured in the PCH for an STA, the following situations may occur.

When an AP performs frame exchange with one TA within a transmission opportunity (TXOP), other STAs set intra-BSS NAV based on the primary channel. At this time, when an STA with set intra-BSS NAV accesses the SCH and transmits a frame to the AP, if the AP performs transmission (Tx) (e.g., DL data, ACK (acknowledgement), etc.), the AP does not receive it (i.e., the frame on the SCH transmitted from the STA to the AP).

Therefore, to prevent the above situation, an STA can perform SCA only when a Basic NAV is set from a BSS other than its own BSS (i.e., an overlapping BSS (OBSS)) in the PCH.

That is, an STA can perform SCA when a Basic NAV is set in the PCH.

The basic procedure for SCA is described below with reference to the drawings.

FIG. 13 illustrates a basic procedure for secondary channel access according to an embodiment of the present disclosure.

### 1) Frame Transmission Method

As shown in the example of FIG. 12, when the back-off counter reaches 0 through back-off on P20, the STA can transmit a frame through i) P20 and ii) one or more SCHs that are IDLE, based on whether one or more SCHs are IDLE or BUSY.

The SCA proposed in this disclosure considers the situation where P20 is BUSY, requiring a change in the operation according to the prior art. The back-off operation proposed in this disclosure is as follows.
- When P20 is BUSY, the STA can perform back-off on one or more SCHs.

For example, if a neighboring STA having the same or similar operation channel as a specific STA does not perform back-off on a channel that includes/overlaps with the SCH of the specific STA, the channel may be determined to be IDLE for a predetermined short period of time (e.g., 1 slot) based on the CCA result. In this case, if the specific STA and the neighboring STA transmit frames at the same time, a collision may occur, which may result in channel waste. Therefore, back-off also needs to be performed on the SCH.

Here, if the remaining NAV timer in the current PCH (P20) is not sufficient time to secure a TXOP on the SCH, the STA may not perform a back-off on the SCH.
- When the back-off counter reaches 0, the STA may perform Type 2 CCA on other SCH(s) other than the one or more SCHs that performed the back-off. For example, the STA may perform a CCA on other SCH(s) other than the SCH that performed the back-off during a certain period of time (e.g., a priority interframe space (PIFS)) before the back-off counter reaches 0 on the SCH that performed the back-off, to determine whether the channel is idle or busy.
- Based on the CCA results, the STA can transmit a frame on a channel that includes one or more SCHs that are idle and one or more SCHs that have performed a back-off.

FIG. 13 illustrates a case where the STA performs a back-off on S20 when P20 is BUSY. Here, it is assumed that when the back-off counter on S20 reaches 0, both 20MHz channels on S40 are idle. Therefore, in this case, the STA can transmit an 80MHz PPDU (including a MAC frame) that includes signaling/information that P20 has been punctured.

### 2) TXOP Configuration Method

Since STAs are required to perform CCA for P20 when the basic NAV on P20 expires, STAs can configure the TXOP end time so that the TXOP on the SCH ends before the basic NAV on P20 expires.

If the TXOP on the SCH is configured to end after the basic NAV on P20 expires, legacy STAs, etc., may transmit frames over P20 after the basic NAV set for the STA, which could result in the STA not receiving those frames (i.e., because the frame transmission is performed on the SCH). Furthermore, if the target beacon transmission time (TBTT) is set midway between the basic NAV and the AP, the AP must prepare to transmit a beacon immediately after the basic NAV, which can cause problems. Non-AP STAs may also fail to receive the beacons sent by the AP in a timely manner and may end up waiting longer than the scheduled time. Therefore, by setting the end time of the TXOP of the SCH so that the TXOP of the SCH ends before the time when the basic NAV of P20 expires, the STA can perform normal frame exchange in P20.

If there is insufficient time to establish a TXOP on the SCH (i.e., if the time required for frame exchange on the SCH cannot be secured before the basic NAV of P20 expires), the STA may not transmit a frame on the SCH. In other words, if it is difficult to acquire a TXOP on the SCH within the interval between the time the back-off counter on the SCH reaches 0 and the time the basic NAV on the PCH ends, the STA may not transmit a frame.

For example, as in the example of FIG. 13, when back-off is performed on S20 and the back-off counter reaches 0, setting a TXOP for the SCH, the STA may set the TXOP for the SCH to end earlier than the time the basic NAV on P20 ends.

Meanwhile, it is not possible for the AP and the STA to know exactly whether the NAV (especially, the Basic NAV) is set in the PCH. For example, if the AP and the STA detect a frame from the same OBSS STA and set the same Basic NAV, both the AP and the STA may perform SCA in the same manner, enabling frame exchange. However, a hidden node in either the AP or the STA may cause only one of the AP and the STA to set the Basic NAV, or the AP and the STA may set different Basic NAVs. Therefore, sharing NAV information with each other may be helpful for SCA.

However, since no information can be provided through the channel currently configured with the NAV, multi-link can be utilized in this case.

As described above, multi-link operation (MLO) may refer to a series of procedures (e.g., discovery, de-authentication, re-association, multi-link setup, frame exchange, etc.) that allow communication between multi-link devices (MLDs) via one or more links.

NAV information may include one or more pieces of information as follows. The NAV proposed in this disclosure may be transmitted using a data frame (e.g., included in HE A-Control, etc.) or a (separate) Management frame.

### - NAV information

Here, the NAV information may include the remaining NAV duration from the start time (or end time) of the frame in which the NAV information is transmitted.

Here, the NAV information may be exchanged using multi-links as described above. For example, the NAV information for the first link may be transmitted over the second link.

Furthermore, for example, the NAV information (i.e., the remaining duration) may be transmitted using two octets of the existing Duration/ID field. As another example, the field size for transmitting the NAV information (i.e., the remaining duration) may be reduced using granularity (e.g., 8us, 32us, 128us), similar to the TXOP field of the PHY header. For example, one or two bits may indicate the granularity, and the remaining six or more bits may indicate the actual NAV duration information.

Here, since the NAV duration is information received from another link, actual application may be determined/considered/calculated based on the timing synchronization function (TSF) of the link on which the NAV is set.

Alternatively, the NAV information may include information regarding the end point of the NAV, rather than the NAV duration. Here, the end point of the NAV is referred to as the NAV End Time (i.e., NAV_ET).

Since the NAV_ET of one link must be reported from another link, and each link's AP operates with its own TSF, the NAV time needs to be adjusted. That is, when transmitting the NAV_ET on one link, the value must be set considering the TSF of the link corresponding to the NAV_ET. For example, if the TSF difference between the two links is 30, the indication should be made through a drift of 30. However, if 8 octets of information corresponding to the TSF are required to transmit the NAV_ET, it has excessive overhead. Therefore, the NAV_ET may be indicated by utilizing some bits of the TSF. For example, it can be configured as 2 octets by utilizing some bits of the TSF, such as the target wake time (TWT).

### - Link identifier (ID)

The Link ID Info field in the ML element of FIG. 10 is composed of a 4-bit Link ID subfield indicating a link identifier and 4 reserved bits. Therefore, the link identifier may be indicated using the 4 bits of the Link ID field as they are, or some of the bits may be used. Additionally or alternatively, each link identifier may be indicated using the Link ID bitmap. That is, each bit of the link ID bitmap corresponds to each link ID, and a specific link may be indicated through the bit corresponding to each link ID (e.g., bit value = 1).

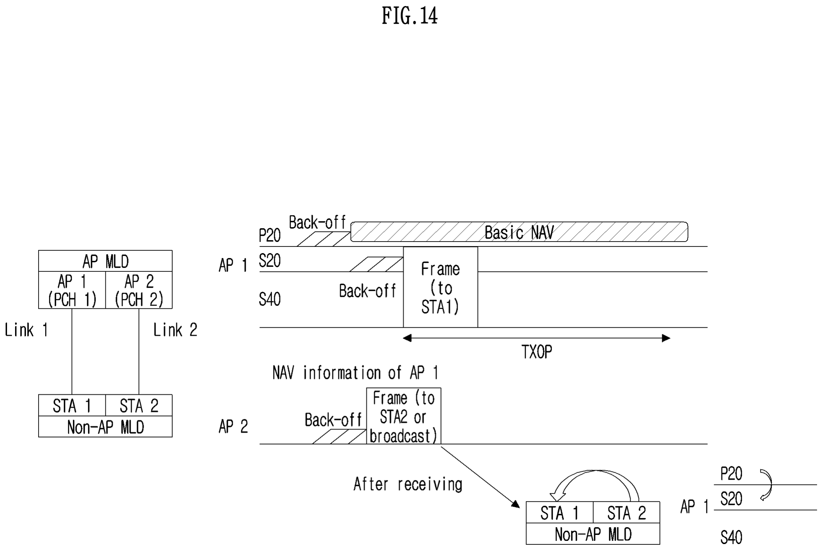

FIG. 14 illustrates a NAV sharing method using a multi-link device according to an embodiment of the present disclosure.

FIG. 14 illustrates a method in which basic NAV information is shared/transmitted by an AP MLD to a non-AP MLD. In FIG. 14, it is assumed that PCH 1 between AP 1 and STA 1 is associated/corresponding to Link 1, and PCH 2 between AP 2 and STA 2 is associated/corresponding to Link 1.

Referring to FIG. 14, when AP 1 configures the Basic NAV in its PCH, AP 2 can individually transmit the NAV information of AP 1 to a specific STA (e.g., STA 2) within a frame or announce it in a broadcast format so that multiple STAs can recognize it.

If any STA affiliated with a non-AP MLD receives a frame including NAV information of a specific AP, the non-AP MLD can recognize the NAV information of the AP. For example, if STA 2 receives NAV information of AP 1 from AP 2, the NAV information may be shared internally in the non-AP MLD, and thus STA 1 can recognize the NAV information of AP 1. Therefore, since STA 1 can expect that AP 1 will perform SCA even if the current PCH is IDLE, it can switch to the SCH and not perform unnecessary transmission in the PCH. Accordingly, STA 1 can receive a frame from AP 1 on the SCH (e.g., S20+S40).

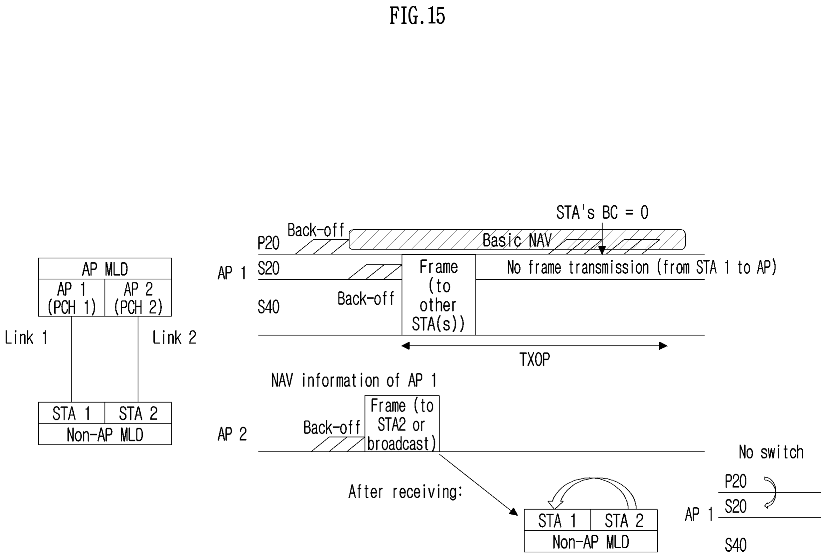

FIG. 15 illustrates a NAV sharing method using a multi-link device according to an embodiment of the present disclosure.

FIG. 15 illustrates a method in which basic NAV information is shared/transmitted to a non-AP MLD by an AP MLD. In FIG. 15, it is assumed that PCH 1 between AP 1 and STA 1 is associated/corresponding to link 1, and PCH 2 between AP 2 and STA 2 is associated/corresponding to link 1.

Referring to FIG. 15, when AP 1 sets Basic NAV in the PCH, AP 2 can individually transmit the NAV information of AP 1 to a specific STA (e.g., STA 2) within a frame, or announce it in a broadcast format so that multiple STAs can recognize it.

If any STA affiliated with a non-AP MLD receives a frame including NAV information for a specific AP, the non-AP MLD can recognize the NAV information for that AP. For example, if STA 2 receives NAV information for AP 1 from AP 2, the NAV information can be shared internally within the non-AP MLD, allowing STA 1 to recognize the NAV information for AP 1.

Here, STA 1 may not switch to the SCH (i.e., perform SCA) for various reasons, such as i) not supporting SCA or ii) insufficient Basic NAV expiration time to secure a TXOP. In this case, STA 1 may not transmit a frame to AP 1 even if the backoff counter (BS) in P20 reaches 0 (i.e., expires), as it may expect AP 1 to perform SCA.

Additionally or alternatively, AP 2 may provide information (e.g., BSS color) to AP 1 about from which BSS the Basic NAV is set (e.g., may be included in the NAV information). This information may additionally be utilized/assisted by STA 1 to determine whether to perform SCA. That is, STA 1 may determine whether to perform SCA based on the information about from which BSS the Basic NAV is set. For example, if the BSS corresponding to the received BSS color information is a BSS that is not affected by STA 1 and has transmitted this information to AP 1, STA 1 may not perform SCA because it may expect that AP 1 will not transmit a frame to it when performing SCA.

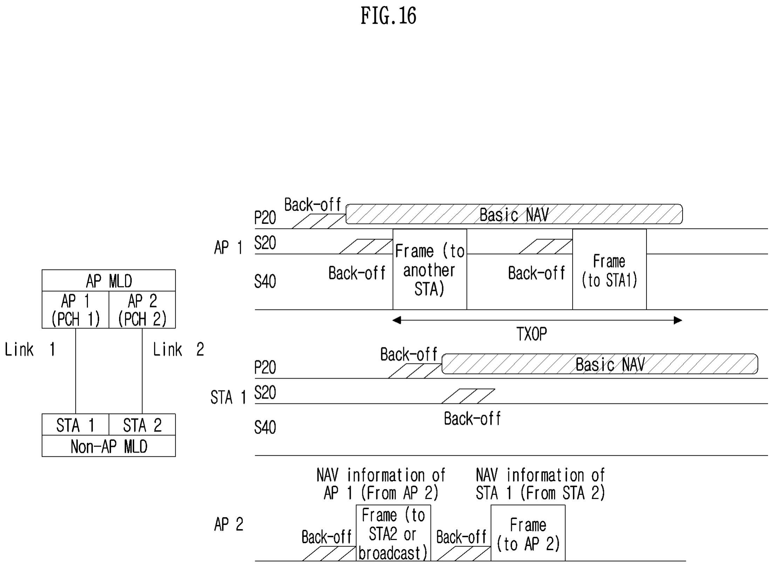

FIG. 16 illustrates a NAV sharing method using a multi-link device according to an embodiment of the present disclosure.

FIG. 16 illustrates that AP MLD and non-AP MLD share different Basic NAV information. That is, basic NAV information is shared/transmitted to non-AP MLD by AP MLD, and also basic NAV information is shared/transmitted to AP MLD by non-AP MLD. In FIG. 16, it is assumed that PCH 1 between AP 1 and STA 1 is associated/corresponds to link 1, and PCH 2 between AP 2 and STA 2 is associated/corresponds to link 1.

Referring to FIG. 16, if AP 1 sets the Basic NAV in the PCH, AP 2 can individually transmit the NAV information of AP 1 to a specific STA (e.g., STA 2) within a frame or announce it in a broadcast format so that multiple STAs can recognize it.

Similarly, if STA 1 sets a different Basic NAV from AP 1 in the PCH, STA 2 can individually transmit the NAV information of STA 1 to a specific AP (e.g., AP 2) within a frame.

If any STA affiliated with a non-AP MLD receives a frame including NAV information of a specific AP, the non-AP MLD can recognize the NAV information of the AP. For example, if STA 2 receives NAV information of AP 1 from AP 2, the NAV information can be shared internally in the non-AP MLD, and thus STA 1 can recognize the NAV information of AP 1.

Similarly, if any AP affiliated with the AP MLD receives a frame including NAV information of a specific STA, the AP MLD can recognize the NAV information of that STA. For example, if AP 2 receives NAV information of STA 1 from STA 2, the NAV information can be shared internally within the AP MLD, thereby allowing AP 1 to recognize the NAV information of STA 1.

When the two parties recognize each other's NAV information, since the AP MLD can know the Basic NAV start and length of STA 1 in the non-AP MLD, after receiving the NAV information, AP 1 can transmit a frame to STA 1 via the SCH (i.e., based on the SCA). Alternatively, since the non-AP MLD can know the Basic NAV start and length of AP 1 in the AP MLD, STA 1 can transmit a frame to AP 1 via the SCH (i.e., based on the SCA) after receiving the NAV information. Here, AP 1 or STA 1 can compare the NAV duration of AP 1 and the NAV duration of STA 1 and obtain a TXOP based on one of the NAV durations. For example, this can be based on the shorter NAV duration of the two, the longer NAV duration of the two, or the NAV duration set for each party.

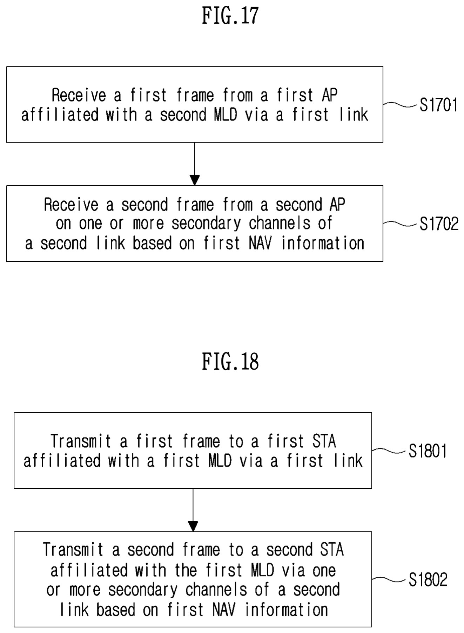

FIG. 17 illustrates an operation of a station device for a NAV information sharing method for secondary channel access according to an embodiment of the present disclosure.

FIG. 17 illustrates the operation of a multi-link device based on the previously proposed methods. The example in FIG. 17 is provided for convenience of explanation and does not limit the scope of the present disclosure. Some of the step(s) illustrated in FIG. 17 may be omitted depending on the situation and/or setting.

Here, the multi-link device may refer to a device capable of multi-link operation. In addition, the multi-link device may be a non-AP MLD (hereinafter, "first MLD") in which each STA affiliated with the multi-link device is a non-AP STA, or an AP MLD (hereinafter, "second MLD") in which each STA affiliated with the multi-link device is an AP.

In addition, a capability supporting secondary channel access operation may be defined (e.g., level 1, 2). In this case, it is assumed that the first MLD (or one or more non-AP STAs affiliated with the first MLD) and the second MLD (or one or more APs affiliated with the second MLD) of FIG. 17 have a capability supporting secondary channel access operation.

In addition, in FIG. 17, it is assumed that the first non-AP STA and the second non-AP STA affiliated with the first MLD, and the first AP and the second AP affiliated with the second MLD.

Referring to FIG. 17, a first STA affiliated with a first MLD receives a first frame from a first AP affiliated with a second MLD via a first link (S1701).

Here, the first link and the second link are configured for multi-link operation, and the first frame may include first NAV (network allocation vector) information for a second AP affiliated with the second MLD configured for the primary channel of the second link.

Here, the first NAV information may include information on the duration of the NAV of the second AP remaining from the start or end time of the first frame. Alternatively, the first NAV information may include information on the end time of the NAV of the second AP.

In addition, the first frame may further include an identifier of a link for which the NAV of the second AP is configured.

A second STA affiliated with a first MLD receives a second frame from a second AP affiliated with a second MLD on one or more secondary channels of a second link based on first NAV information (S1702).

Here, based on the capability of the second STA to access the one or more secondary channels and/or the remaining time of the NAV of the second AP being greater than a predetermined threshold, the second STA may determine to receive the second frame on the one or more secondary channels.

Furthermore, even if the backoff counter for the primary channel of the second link expires, the second STA may not transmit a frame on the primary channel of the second link within the duration of the NAV of the second AP.

Meanwhile, although not illustrated in FIG. 17, the first STA affiliated with the first MLD may transmit a third frame to the first AP affiliated with the second MLD via the first link. Here, the third frame may include second NAV information for the NAV of the second STA affiliated with the first MLD configured for the primary channel of the second link.

Here, the second NAV information may include information on the duration of the NAV of the second STA remaining from the start or end time of the third frame. Alternatively, the second NAV information may include information on the end time of the NAV of the second STA.

In addition, the third frame may further include an identifier of a link on which the NAV of the second STA is configured.

In this case, the second frame may be transmitted based on both the duration of the NAV of the second AP and the duration of the NAV of the second STA.

Meanwhile, when the first MLD (i.e., the first STA or the second STA affiliated with the first MLD) receives the first frame and the second frame, it means receiving a PPDU including the first frame and the second frame. In addition, when the first MLD (i.e., the first STA or the second STA affiliated with the first MLD) transmits the third frame, it means configuring a PPDU including the third frame and transmitting the PPDU.

Here, the PPDU can be composed of a legacy portion, a SIG portion (e.g., U-SIG, UHR-SIG, etc.), an STF portion (e.g., UHR-STF), an LTF portion (e.g., UHR-LTF), and a data portion.

All or part of any part (i.e., field) may be divided into multiple subparts/subfields. Each field (and its subfields) may be transmitted in units of 4us * N (where N is an integer). Additionally, a guard interval (GI) may be included. A common subcarrier frequency spacing value (delta_f = 312.5 kHz / N or 312.5 kHz * N, where N is an integer) may be applied to all fields, or a first delta_f may be applied to a first part (e.g., all of the legacy part, all/part of the SIG part), and a second delta_f (e.g., a value smaller than the first delta_f) may be applied to all/part of the remaining parts.

Some of the above-described fields may be omitted, and the order of the fields may be changed in various ways. For example, the subfields of the signal part may be placed before the STF part, and the remaining subfields of the SIG part may be placed after the STF part.

The legacy part described above may include at least one of the conventional Non-HT Short Training Field (L-STF), Non-HT Long Training Field (L-LTF), and Non-HT Signal Field (L-SIG).

The SIG part described above (e.g., including the U-SIG field, UHR-SIG field, etc.) may include various control information for the transmitted PPDU. For example, it may include the STF part, the LTF part, and control information for data decoding.

The STF part described above may include an STF sequence.

The LTF part described above may include a training field (i.e., an LTF sequence) for channel estimation.

The data portion described above may include user data and packets for upper layers. That is, an MPDU (i.e., a second frame) may be included in the data portion.

The method described in the example of FIG. 17 may be performed by the first device (100) (i.e., the first MLD) of FIG. 1. For example, one or more processors (102) of the first device (100) of FIG. 1 may be configured to allow a first STA affiliated with the first MLD to receive NAV information of a second AP affiliated with the second MLD through a first frame from a first AP affiliated with the second MLD via transceiver(s) (106), and to allow a second STA affiliated with the first MLD to receive a second frame from a second AP affiliated with the second MLD on one or more secondary channels. Furthermore, one or more memories (104) of the first device (100) may store commands for performing the method described in the example of FIG. 17 or the examples described above when executed by one or more processors (102).

FIG. 18 illustrates an operation of an access point device for a secondary channel access method according to an embodiment of the present disclosure.

FIG. 18 illustrates the operation of a multi-link device based on the previously proposed methods. The example in FIG. 18 is provided for convenience of explanation and does not limit the scope of the present disclosure. Some of the step(s) illustrated in FIG. 18 may be omitted depending on the situation and/or setting.

Here, the multi-link device may refer to a device capable of multi-link operation. In addition, the multi-link device may be a non-AP MLD (hereinafter, "first MLD") in which each STA affiliated with the multi-link device is a non-AP STA, or an AP MLD (hereinafter, "second MLD") in which each STA affiliated with the multi-link device is an AP.

In addition, a capability supporting secondary channel access operation may be defined (e.g., level 1, 2). In this case, it is assumed that the first MLD (or one or more non-AP STAs affiliated with the first MLD) and the second MLD (or one or more APs affiliated with the second MLD) of FIG. 18 have a capability supporting secondary channel access operation.

In addition, in FIG. 18, it is assumed that the first non-AP STA and the second non-AP STA affiliated with the first MLD, and the first AP and the second AP affiliated with the second MLD.

Referring to FIG. 18, a first AP affiliated with a second MLD transmits a first frame to a first STA affiliated with a first MLD via a first link (S1801).

Here, the first link and the second link are configured for multi-link operation, and the first frame may include first NAV (network allocation vector) information for a second AP affiliated with the second MLD configured for the primary channel of the second link.

Here, the first NAV information may include information on the duration of the NAV of the second AP remaining from the start or end time of the first frame. Alternatively, the first NAV information may include information on the end time of the NAV of the second AP.

In addition, the first frame may further include an identifier of a link for which the NAV of the second AP is configured.

A second AP affiliated with a second MLD transmits a second frame to a second STA affiliated with a first MLD on one or more secondary channels of a second link based on first NAV information (S1802).

Meanwhile, although not illustrated in FIG. 18, the first AP affiliated with the second MLD may receive a third frame from the first STA affiliated with the first MLD via the first link. Here, the third frame may include second NAV information for the NAV of the second STA affiliated with the first MLD set for the primary channel of the second link.

Here, the second NAV information may include information on the duration of the NAV of the second STA remaining from the start or end time of the third frame. Alternatively, the second NAV information may include information on the end time of the NAV of the second STA.

In addition, the third frame may further include an identifier of a link for which the NAV of the second STA is configured.

In this case, the second frame may be transmitted based on both the duration of the NAV of the second AP and the duration of the NAV of the second STA.

Meanwhile, when the second MLD (i.e., the first AP or the second AP affiliated with the second MLD) transmits the first frame and the second frame, it means configuring a PPDU including the first frame and the second frame and transmitting the PPDU. Furthermore, when the second MLD (i.e., the first AP or the second AP affiliated with the second MLD) receives the third frame, it means receiving a PPDU including the third frame.

Here, the PPDU can be composed of a legacy portion, a SIG portion (e.g., U-SIG, UHR-SIG, etc.), an STF portion (e.g., UHR-STF), an LTF portion (e.g., UHR-LTF), and a data portion.

All or part of any part (i.e., field) may be divided into multiple subparts/subfields. Each field (and its subfields) may be transmitted in units of 4us * N (where N is an integer). Additionally, a guard interval (GI) may be included. A common subcarrier frequency spacing value (delta_f = 312.5 kHz / N or 312.5 kHz * N, where N is an integer) may be applied to all fields, or a first delta_f may be applied to a first part (e.g., all of the legacy part, all/part of the SIG part), and a second delta_f (e.g., a value smaller than the first delta_f) may be applied to all/part of the remaining parts.

Some of the above-described fields may be omitted, and the order of the fields may be changed in various ways. For example, the subfields of the signal part may be placed before the STF part, and the remaining subfields of the SIG part may be placed after the STF part.

The legacy part described above may include at least one of the conventional Non-HT Short Training Field (L-STF), Non-HT Long Training Field (L-LTF), and Non-HT Signal Field (L-SIG).

The SIG part described above (e.g., including the U-SIG field, UHR-SIG field, etc.) may include various control information for the transmitted PPDU. For example, it may include the STF part, the LTF part, and control information for data decoding.

The STF part described above may include an STF sequence.

The LTF part described above may include a training field (i.e., an LTF sequence) for channel estimation.

The data portion described above may include user data and packets for upper layers. That is, an MPDU (i.e., a second frame) may be included in the data portion.

The method described in the example of FIG. 18 may be performed by the second device (200) of FIG. 1 (i.e., the second MLD). For example, one or more processors (202) of the second device (200) of FIG. 1 may be configured to cause a first AP affiliated with the second MLD to transmit NAV information of the second AP affiliated with the second MLD to a first STA affiliated with the first MLD via a first frame through the transceiver(s) (206), and to cause the second AP affiliated with the second MLD to transmit a second frame to the second STA affiliated with the first MLD on one or more secondary channels. Furthermore, one or more memories (204) of the second device (200) may store commands for performing the method described in the example of FIG. 18 or the examples described above when executed by one or more processors (202).

In conventional wireless LAN systems, if the medium for the primary channel is in a busy state, the secondary channel cannot be used. However, according to the secondary channel access method according to the examples of the present disclosure, the medium for the secondary channel can be used even if the medium for the primary channel is in a busy state, thereby improving the efficiency of medium use. In addition, by sharing information about the NAV set for the primary channel between the AP MLD and the STA MLD using a multi-link, the failure of the secondary channel access operation due to a mismatch in the NAV settings between the transmitting device and the receiving device caused by a hidden node can be prevented.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Availability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a first multi-link device (MLD) in a wireless local area network (WLAN) system, the method comprising:
receiving, by a first station (STA) affiliated with the first MLD, a first frame from a first access point (AP) affiliated with a second MLD via a first link, wherein the first link and the second link are configured for multi-link operation, and the first frame includes first network allocation vector (NAV) information for a NAV of a second AP affiliated with the second MLD configured for a primary channel of the second link; and
receiving, by a second STA affiliated with the first MLD, a second frame from the second AP on one or more secondary channels of the second link based on the first NAV information,
wherein a location for one or more first type RUs of the PPDU is indicated by an RU allocation subfield in an ascending order of the plurality of first type RUs based on a lowest subcarrier of each of the plurality of first type RUs in a frequency domain.

2. The method of claim 1, wherein the first NAV information includes information for a remaining duration of the NAV of the second AP from a start or end time of the first frame.

3. The method of claim 1, wherein the first NAV information includes information for an end time of the NAV of the second AP.

4. The method of claim 1, wherein the first frame further includes an identifier of a link on which the NAV of the second AP is configured.

5. The method of claim 1, wherein, based on the second STA having an ability to access the one or more secondary channels and/or the remaining duration of the NAV of the second AP being greater than a predetermined threshold, the second STA determines to receive the second frame on the one or more secondary channels.

6. The method of claim 1, wherein, even if a backoff counter for the primary channel of the second link expires, the second STA does not transmit a frame on the primary channel of the second link within a duration of the NAV of the second AP.

7. The method of claim 1, further comprising:
transmitting, by the first STA affiliated with the first MLD, a third frame to the first AP via the first link, wherein the third frame including second NAV information for a NAV of a second STA configured for a primary channel of the second link.

8. The method of claim 7, wherein the second NAV information includes information for a remaining duration of the NAV of the second STA from a start or end time of the third frame.

9. The method of claim 7, wherein the second NAV information includes information for an end time of the NAV of the second STA.

10. The method of claim 7, wherein the third frame further includes an identifier of a link on which the NAV of the second STA is configured.

11. The method of claim 7, wherein the second frame is transmitted based on both a duration of the NAV of the second AP and a duration of the NAV of the second STA.

12. A first multi-link device (MLD) in a wireless local area network (WLAN) system, the first MLD comprising:
at least one transceiver; and
at least one processor connected to the at least one transceiver,
wherein the at least one processor configured to:
receive, by a first station (STA) affiliated with the first MLD, a first frame from a first access point (AP) affiliated with a second MLD via a first link, wherein the first link and the second link are configured for multi-link operation, and the first frame includes first network allocation vector (NAV) information for a NAV of a second AP affiliated with the second MLD configured for a primary channel of the second link; and
receive, by a second STA affiliated with the first MLD, a second frame from the second AP on one or more secondary channels of the second link based on the first NAV information,
wherein a location for one or more first type RUs of the PPDU is indicated by an RU allocation subfield in an ascending order of the plurality of first type RUs based on a lowest subcarrier of each of the plurality of first type RUs in a frequency domain.

13. A method performed by a second multi-link device (MLD) in a wireless local area network (WLAN) system, the method comprising:
transmitting, by a first access point (AP) affiliated with the second MLD, a first frame to a first station (STA) affiliated with a first MLD via a first link, wherein the first link and the second link are configured for multi-link operation, and the first frame includes first network allocation vector (NAV) information for a NAV of a second AP affiliated with the second MLD configured for a primary channel of the second link; and
transmitting, by the second AP, a second frame to a second STA affiliated with the first MLD on one or more secondary channels of the second link based on the first NAV information.

14. A second multi-link device (MLD) in a wireless local area network (WLAN) system, the MLD comprising:
at least one transceiver; and
at least one processor connected to the at least one transceiver,
wherein the at least one processor configured to:
transmit, by a first access point (AP) affiliated with the second MLD, a first frame to a first station (STA) affiliated with a first MLD via a first link, wherein the first link and the second link are configured for multi-link operation, and the first frame includes first network allocation vector (NAV) information for a NAV of a second AP affiliated with the second MLD configured for a primary channel of the second link; and
transmit, by the second AP, a second frame to a second STA affiliated with the first MLD on one or more secondary channels of the second link based on the first NAV information.

15. A processing device configured to control a multi-link device (MLD) in a wireless local area network (WLAN) system, the processing device comprising:
at least one processor; and
at least one computer memory operably connected to the at least one processor, and based on being executed by the at least one processor, storing instructions for performing a method according to any one claim of claim 1 to claim 11.

16. At least one non-transitory computer-readable medium storing at least one instruction, wherein:
the at least one instruction controls a device to perform a method according to any one claim of claim 1 to claim 11 in a wireless local area network (WLAN) system by being executed by at least one processor.
